# EUROPEAN PATENT SPECIFICATION

(11) **EP 3 757 058 B1**
(45) Date of publication and mention of the grant of the patent: **14.02.2024**
(21) Application number: 20178733.0
(22) Date of filing: 08.06.2020
(51) Int. Cl.: B66F 9/075, B66F 9/065, B60K 7/00, B60K 17/16, B60K 1/00

(54) **AN ELECTRIC LIFTING TRUCK**
ELEKTRISCHER HUBWAGEN
CHARIOT ÉLÉVATEUR ÉLECTRIQUE

(30) Priority: 26.06.2019 IT 201900010098
(43) Date of publication of application: 30.12.2020
(73) Proprietor: Merlo Project S.r.l., I-12010 - Cervasca (Cuneo) (IT)
(72) Inventor: MERLO, Mr. Amilcare, I-12100 San Rocco Castagnaretta (Cuneo) (IT); CONTESSINI, Mr. Felice, I-12010 Cervasca (Cuneo) (IT)
(74) Representative: Marchitelli, Mauro

(56) References cited:
- EP-A1- 0 569 277
- WO-A2-2019/040028
- CN-U- 203 580 592
- CN-U- 205 930 205
- US-A1- 2015 107 914
- US-A1- 2019 128 316

## Description

### Field of the invention

The present invention relates to an electric lifting truck.

### Description of the prior art

Electric lifting trucks must generally have very small turning radii in order to be able to maneuver in confined spaces, for example, in the aisles of industrial or commercial warehouses.

To reduce the turning radii, some known electric lifting trucks are equipped with a single steered rear wheel or a pair of twin wheels. This solution allows very high steering angles to be obtained. However, in this case, the single rear wheel or the twin rear wheels are generally idle and traction is entrusted to the front wheels only. An example of this solution is illustrated, for example, in EP-A-0569277, which describes an electric forklift truck including a frame, two front wheels and at least one rear wheel, a driver's cab, a battery compartment, and a telescopic lifting arm articulated in the rear part of the frame and extending forwards along a median longitudinal axis of the truck.

There are also lifting trucks with rear wheel drive, with a single motorized rear wheel or with motorized twin rear wheels. Solutions with a single rear wheel or with twin rear wheels, both idle and motorized, offer the advantage of a reduced turning radius but are generally not suitable for use on uneven terrain.

Electric lifting trucks have recently been proposed with a pivoting rear axle carrying two steered rear wheels driven by an electric motor.

To increase the steering angles in solutions with a pivoting rear axle and rear drive wheels, the electric motor for driving the rear wheels is positioned away from the rear axle and is connected to the rear axle by a mechanical transmission including a cardan shaft. This solution has the drawback of reducing the energy efficiency of the machine due to the use of a cardan shaft. Furthermore, this solution involves a large footprint in the central area of the machine, which hinders the positioning of the battery pack.

Solutions have also been proposed which envisage installing the electric motor directly on the rear axle. However, the solutions typically adopted allow reduced steering angles to be obtained (generally not higher than 55°) due to the need for avoiding interference between the wheels and the motor in the steered configuration of the wheels. To increase the turning radius in lifting trucks with steered motorized rear axle, rear wheels with a smaller diameter than the diameter of the front wheels are usually used in order to increase the maximum steering angle without causing interference between the wheels and the motor.

In the current state of the art, there are no solutions that allow the obtainment of small turning radii, the use on rough terrain, and the optimization of energy efficiency.

### Object and summary of the invention

The object of the present invention is to provide an electrically-operated lifting truck that overcomes the problems of the prior art.

In particular, the present invention aims to provide an electric lifting truck having minimum turning radii, usable on rough terrain and which allows maximization of energy efficiency.

To increase the steering angles in solutions with a pivoting rear axle and rear drive wheels, the electric motor for driving the rear wheels is positioned away from the rear axle and is connected to the rear axle by a mechanical transmission including a cardan shaft. This solution has the drawback of reducing the energy efficiency of the machine due to the use of a cardan shaft. Furthermore, this solution involves a large footprint in the central area of the machine, which hinders the positioning of the battery pack.

Solutions have also been proposed which envisage installing the electric motor directly on the rear axle. However, the solutions typically adopted allow reduced steering angles to be obtained (generally not higher than 55°) due to the need for avoiding interference between the wheels and the motor in the steered configuration of the wheels. To increase the turning radius in lifting trucks with steered motorized rear axle, rear wheels with a smaller diameter than the diameter of the front wheels are usually used in order to increase the maximum steering angle without causing interference between the wheels and the motor.

In the current state of the art, there are no solutions that allow the obtainment of small turning radii, the use on rough terrain, and the optimization of energy efficiency.

WO2019/040028 A2 discloses a variable-configuration electric vehicle according to the preamble of claim 1 which is capable of being configured for different works by means of various components and equipment. The vehicle has front and rear steering axels and front and rear electric motors arranged with horizontal axes and directly connected to the respective axles.

CN 205 930 205 U and CN 203 580592 U disclose non-steering axles for vehicles having electric motors arranged vertically.

US 2015/0107914 A1 disclosed a vehicle having driving axle carrying a disk-type electric motor mounted with its axis of rotation oriented vertically.

US 2019/128316 A1 discloses a rotor unit capable of applying a preload to bearings.

### Object and summary of the invention

The object of the present invention is to provide an electrically-operated lifting truck that overcomes the problems of the prior art.

In particular, the present invention aims to provide an electric lifting truck having minimum turning radii, usable on rough terrain and which allows maximization of energy efficiency.

According to the present invention, this object is achieved by an electric lifting truck having the characteristics forming the subject of claim 1.

Embodiments of the present invention relate to an electric lifting truck wherein the steered rear wheels are carried by a rear axle hinged to the frame and pivoting around a longitudinal axis, and provided with a rear electric traction motor mounted directly on the rear axle and wherein the rotation axis of the electric motor is oriented in the vertical direction.

This arrangement prevents the rear wheels from interfering with the overall footprint of the rear electric motor with the maximum steering angle. In this way it is possible to reach high steering angles of the rear wheels, for example greater than 55°.

This arrangement of the rear electric motor offers greater freedom in the design of the steering device of the rear wheels.

Furthermore, with this arrangement of the rear electric motor, the area of the lifting truck between the rear axle and the front wheels is completely free from mechanical components, so that it is possible to obtain a large compartment between the rear axle and the front wheels for the battery pack. The battery pack can, therefore, be removed from one side of the lifting truck without the need to divide it into two or more parts.

The present invention therefore allows production of an electric lifting truck with electric four-wheel drive and with a pivoting rear axle and with rear steered wheels with a large diameter and a high steering angle. This arrangement allows the use of the lifting truck on rough terrain, for example in agricultural environments.

According to a possible embodiment of the invention, the rear wheels may have the same diameter as the front wheels and may have a diameter equal to or greater than half the width of the lifting truck.

### Brief description of the drawings

Further characteristics and advantages of the invention will become apparent from the detailed description that follows, given purely by way of nonlimiting example, wherein:
- Figure 1 is a perspective view of a possible embodiment of an electric lifting truck according to the present invention,
- Figures 2 and 3 are perspective views from different angles of the lifting truck of Figure 1 with the driving cab and telescopic arm removed,
- Figure 4 is a plan view from below of the lifting truck of Figure 1,
- Figure 5 is a perspective view of the part indicated by the arrow V in Figure 3.
- Figure 6 is an exploded perspective view of the rear axle of the lifting truck according to the invention,
- Figure 7 is a vertical cross-section of the rear axle of the lifting truck according to the invention, and
- Figure 8 is a plan view of the rear axle in a steered configuration.

### Detailed description

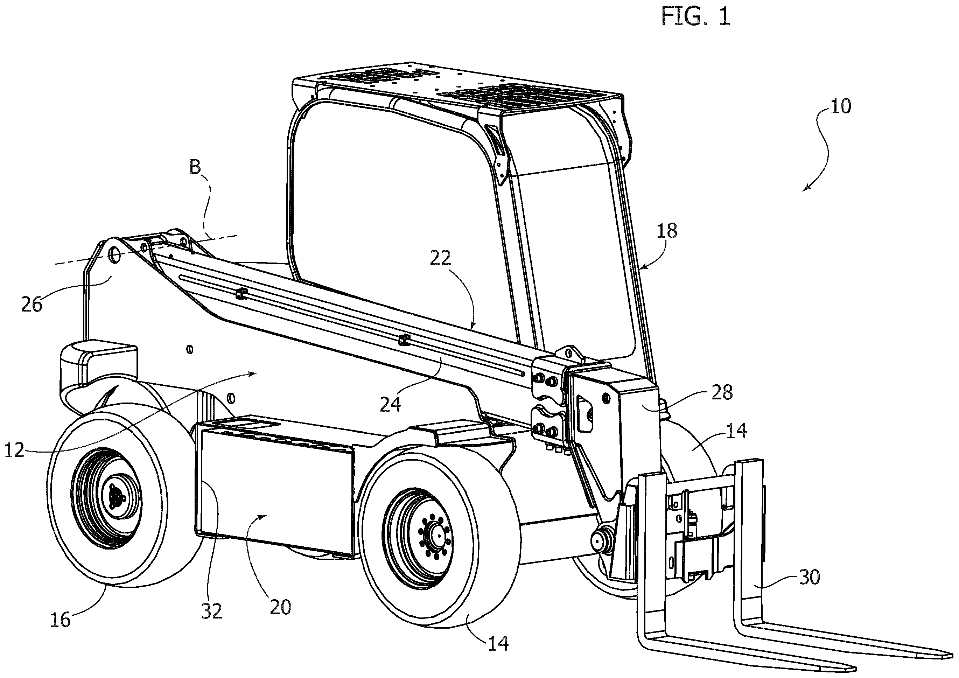

With reference to Figure 1, numeral 10 indicates an electric lifting truck according to an embodiment of the present invention. The lifting truck 10 comprises a frame 12 which carries a pair of front drive wheels 14 and a pair of rear drive and steered wheels 16.

The vehicle 10 comprises a driving cab 18, a battery pack 20 and a lifting device 22. In the embodiment illustrated in the figures, the lifting device 22 comprises a telescopic arm 24 articulated in a rear section 26 of the frame 12 around a transverse axis B. The telescopic arm 24 carries an attachment 28 at its distal end for an implement 30, formed for example by a fork.

In the illustrated embodiment, the driving cab 18 is located laterally with respect to the telescopic arm 24 and the battery pack 20 is housed in a compartment 32 of the frame 12 accessible on a side of the lifting truck 10 opposite the driving cab 18.

In a possible embodiment, the lifting truck 10 instead of the telescopic arm 24 could be equipped with a gantry lifting device mounted on the front part of the frame 12. In this case, the driving cab could be mounted centrally behind the gantry lifting device.

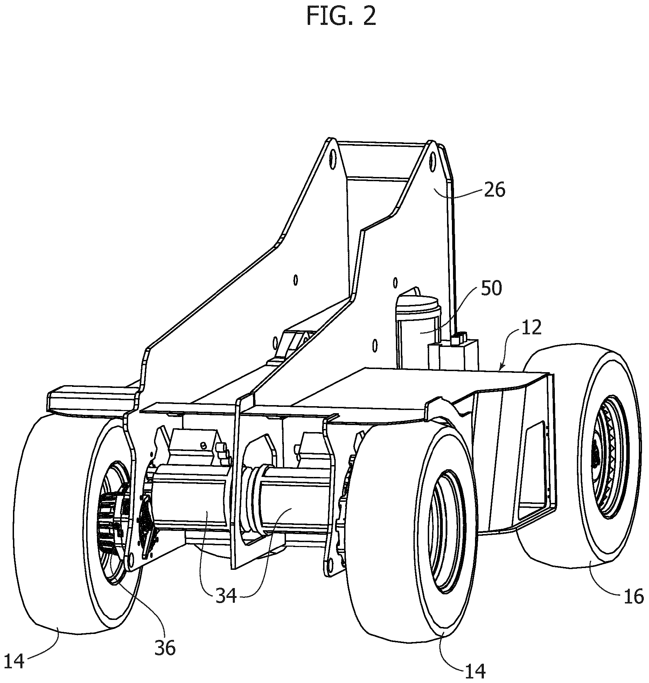

With reference to Figures 2, 3 and 4, the front wheels 14 are non-steered drive wheels, driven by respective front electric motors 34 fixed to the frame 12 and arranged with the respective rotation axes oriented transversely and aligned with each other. Each front electric motor 34 can be connected to the respective wheel 14 by means of a gearbox 36.

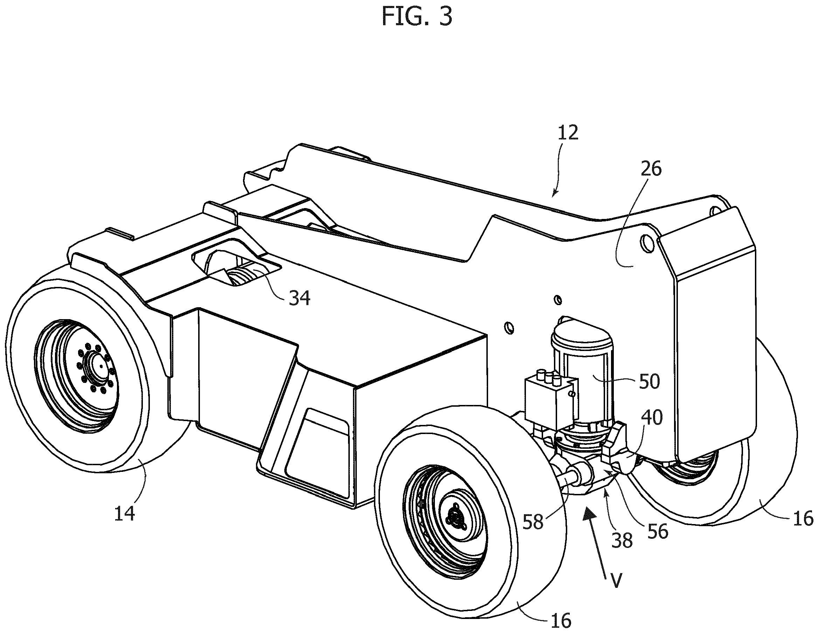

With reference to Figures 3, 4 and 5, the lifting truck 10 comprises a rear axle 38 which carries the rear wheels 16. The rear wheels 16 are driving and steered. The rear axle 38 is mounted on the frame 12 pivoting around a longitudinal axis A of the lifting truck 10.

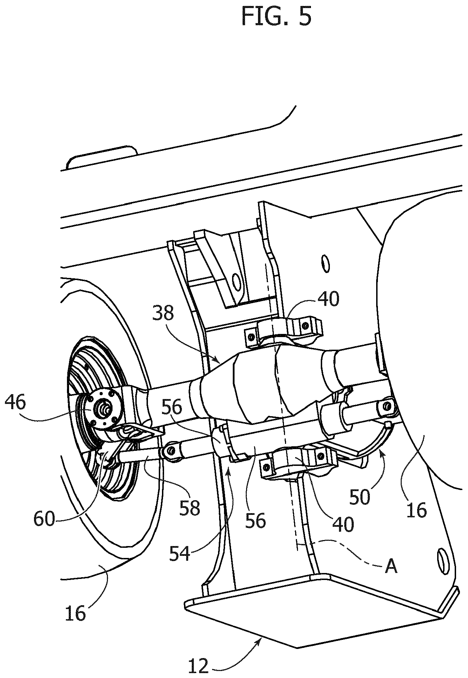

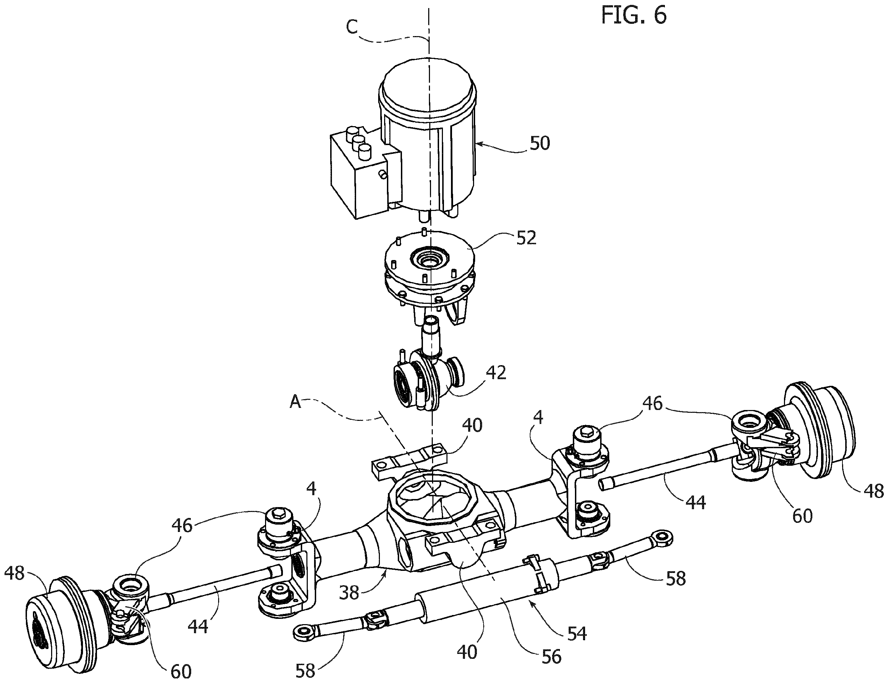

With particular reference to Figures 5 and 6, the pivoting assembly of the rear axle 38 on the frame 12 can be carried out by means of a pair of brackets 40 fixed to the frame 12 and engaged by longitudinal pins aligned with each other, fixed with respect to the rear axle 38.

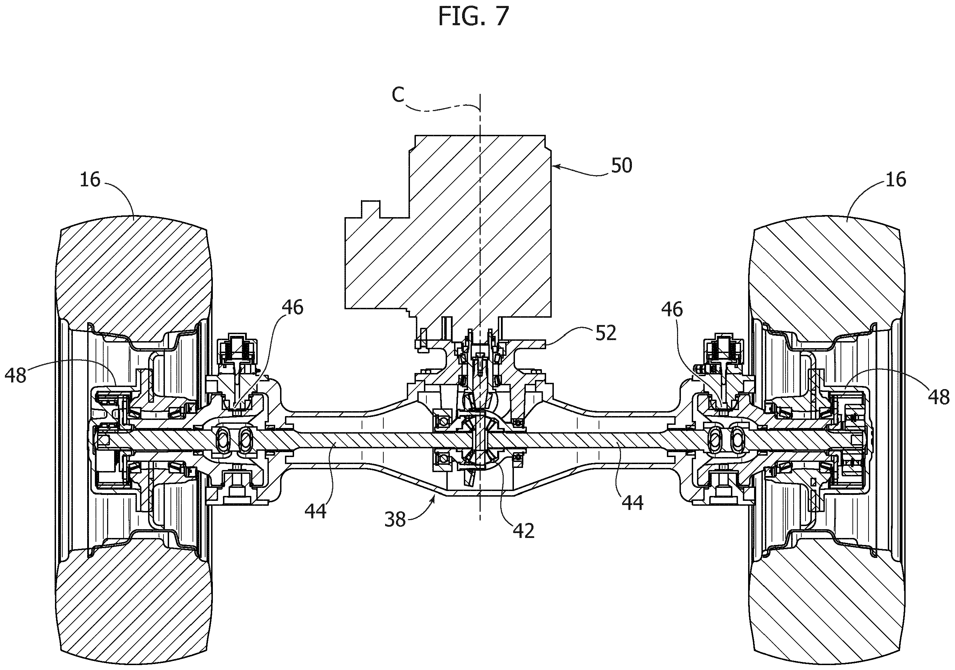

With reference to Figures 6 and 7, the rear axle 38 can be formed of a hollow metal body in which a rear transmission is housed including a differential gear 42 and two axle shafts 44. The rear wheels 16 are connected to the respective axle shafts 44 by means of homokinetic joints 46. In a possible embodiment, the rear wheels 16 can be connected to the respective homokinetic joints 46 by means of respective gearboxes 48 which can be, for example, planetary gearboxes.

The lifting truck 10 comprises a rear electric motor 50 which is fixed to the rear axle by means of a support 52. The electric motor 50 has a vertically oriented rotation axis C. The rotation axis C can be perpendicular to the longitudinal axis A of the lifting truck 10.

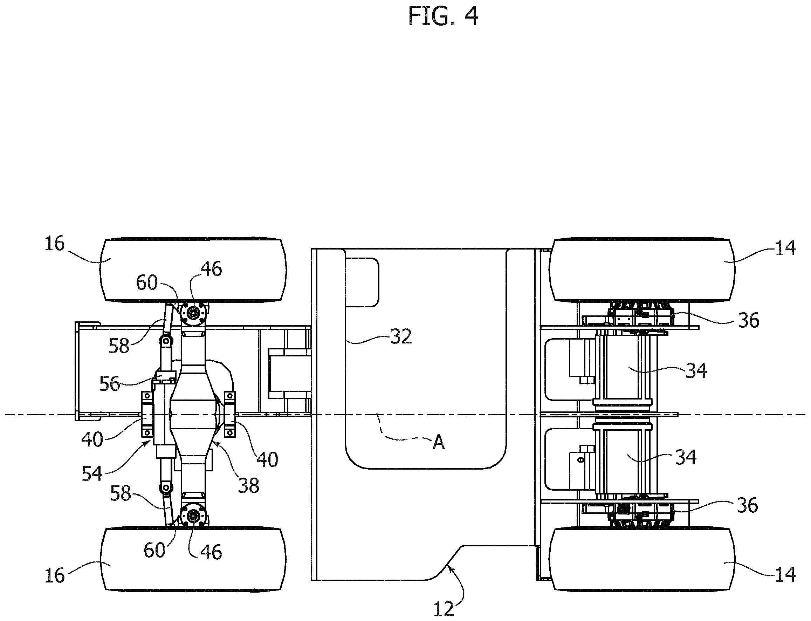

With reference to Figures 4, 5 and 6, the lifting truck 10 comprises a steering device 54 for controlling the steering of the rear wheels 16. The steering device 54 comprises a steering actuator 56, which can be fixed to the rear axle 38, and two steering tie rods 58 articulated to respective steering levers 60, which control the steering of the respective rear wheels 16.

In a possible embodiment of the present invention, the rear wheels 16 can have the same diameter as the front wheels 14. In a possible embodiment, the rear wheels 16 can have a diameter equal to or greater than half the width of the lifting truck 10.

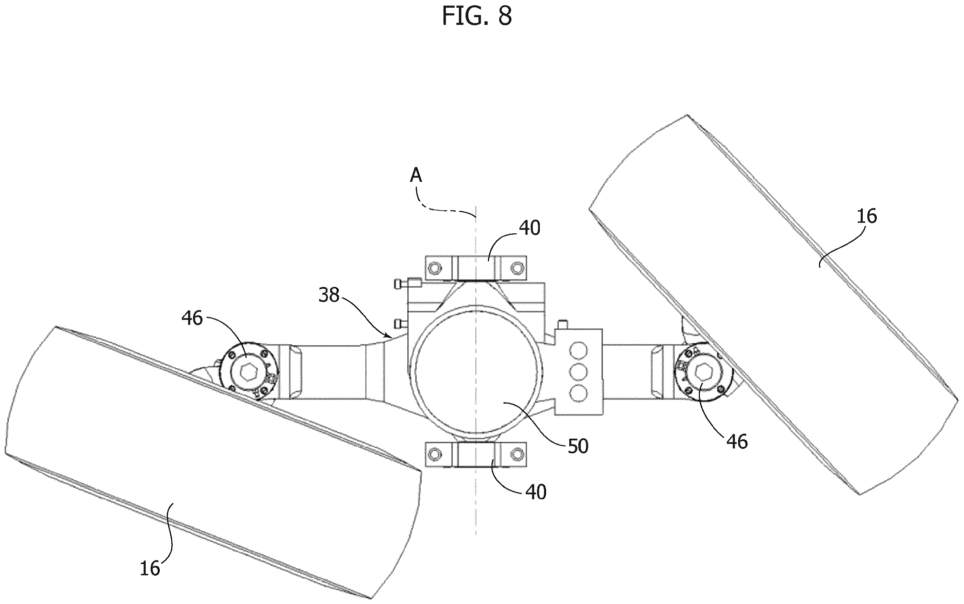

In Figure 8, the rear axle 38 is illustrated in a plan view in the configuration of maximum steering angle. In this figure the steering device has not been shown to simplify the representation. With reference to Figure 8, it can be appreciated that the vertical arrangement of the motor 50 allows very high steering angles of the rear wheels 16 (for example, greater than 55°) without there being any risk of interference between the rear wheels 16 and the rear motor 50, even in the case where the rear wheels 16 have a large diameter.

Therefore, thanks to this arrangement, it is possible to produce a lifting truck with a pivoting rear axle having drive and steered rear wheels, and wherein the rear wheels can have a large diameter, which makes it possible to use the lifting truck even on uneven or rough terrain.

The vertical arrangement of the rear electric motor 50 also allows greater freedom in the design of the steering device of the rear wheels.

Furthermore, this arrangement of the rear electric motor 50 allows connection of the electric motor 50 to the rear differential gear 52 without the need for a cardan shaft, which allows optimization of the energy efficiency of the transmission.

A further advantage of the solution according to the invention is that the central part of the frame 12 between the rear axle 38 and the front wheels 14 is free from mechanical components and allows formation of a large battery compartment 32. This - in turn - allows the provision of a single battery pack 20, without the need to divide the battery pack into two or more parts. The battery pack 20 is easily accessible on the side of the lifting truck 10 and can be inserted and extracted laterally by means of a forklift truck.

Of course, without prejudice to the principle of the invention, the details of construction and the embodiments can be widely varied with respect to those described and illustrated, without thereby departing from the scope of the invention as defined by the claims that follow.

## Claims

1. An electric lifting truck, comprising a frame (12) carrying a pair of front drive wheels (14) and a rear axle (38) carrying a pair of rear steered drive wheels (16) driven by a rear electric motor (50), wherein the rear electric motor (50) is fixed to the rear axle (38), **characterized in that** the rear electric motor (50) is arranged with its own rotation axis (C) oriented vertically.

2. A lifting truck according to claim 1, **characterized in that** the rotation axis (C) of the rear electric motor (50) is orthogonal to the longitudinal axis (A) of the lifting truck (10).

3. A lifting truck according to claim 1 or claim 2, **characterized in that** the rear electric motor (50) is fixed to the rear axle (38) by means of a support (52) .

4. A lifting truck according to any one of the preceding claims, **characterized in that** the rear electric motor (50) is connected to a differential gear (42) housed inside the rear axle (38) and connected to the rear wheels (16) by means of a pair of drive shafts (44) .

5. A lifting truck according to claim 4, **characterized in that** said drive shafts (44) are connected to the respective rear wheels (16) by means of respective homokinetic joints (46) and through respective speed reducers (48).

6. A lifting truck according to any one of the preceding claims, **characterized in that** the rear wheels (16) have the same diameter as the front wheels (14).

7. A lifting truck according to any one of the preceding claims, **characterized in that** the rear wheels (16) have a diameter equal to or greater than half the width of the lifting truck (10).

8. A lifting truck according to any one of the preceding claims, **characterized in that** it comprises a steering device (54) comprising a steering actuator (56) fixed to the rear axle (38) and connected by means of a pair of steering rods (58) to steering arms (60) of the respective rear wheels (16).

9. A lifting truck according to any one of the preceding claims, **characterized in that** it comprises a lifting device (22) including a telescopic arm (24) articulated to a rear section (26) of the frame (12) about a transverse axis (B) and extending forwards.

10. A lifting truck according to any one of the preceding claims, **characterized in that** it comprises a gantry lifting device mounted on the front part of the frame (12).

11. A lifting truck according to any one of the preceding claims, **characterized in that** it comprises a side driving cab (18) and a battery compartment (32) containing a battery pack (20) which can be pulled out laterally from the side of the frame (12) opposite to said driving cab (18).

## Patentansprüche

1. Elektrischer Hubwagen, umfassend einen Rahmen (12), der ein Paar vordere Antriebsräder (14) trägt, und eine Hinterachse (38), die ein Paar hintere gelenkte Antriebsräder (16) trägt, die von einem hinteren Elektromotor (50) angetrieben werden, wobei der hintere Elektromotor (50) an der Hinterachse (38) befestigt ist, **dadurch gekennzeichnet, dass** der hintere Elektromotor (50) so angeordnet ist, dass seine eigene Drehachse (C) vertikal ausgerichtet ist.

2. Hubwagen nach Anspruch 1, **dadurch gekennzeichnet, dass** die Drehachse (C) des hinteren Elektromotors (50) orthogonal zu der Längsachse (A) des Hubwagens (10) ist.

3. Hubwagen nach Anspruch 1 oder Anspruch 2, **dadurch gekennzeichnet, dass** der hintere Elektromotor (50) mit Hilfe einer Halterung (52) an der Hinterachse (38) befestigt ist.

4. Hubwagen nach einem der vorstehenden Ansprüche, **dadurch gekennzeichnet, dass** der hintere Elektromotor (50) mit einem Differentialgetriebe (42) verbunden ist, das in der Hinterachse (38) untergebracht ist und über ein Paar Antriebswellen (44) mit den Hinterrädern (16) verbunden ist.

5. Hubwagen nach Anspruch 4, **dadurch gekennzeichnet, dass** die Antriebswellen (44) mit den jeweiligen Hinterrädern (16) mittels jeweiliger homokinetischer Gelenke (46) und über jeweilige Geschwindigkeitsreduzierer (48) verbunden sind.

6. Hubwagen nach einem der vorstehenden Ansprüche, **dadurch gekennzeichnet, dass** die Hinterräder (16) den gleichen Durchmesser wie die Vorderräder (14) aufweisen.

7. Hubwagen nach einem der vorstehenden Ansprüche, **dadurch gekennzeichnet, dass** die Hinterräder (16) einen Durchmesser aufweisen, der gleich oder größer als die halbe Breite des Hubwagens (10) ist.

8. Hubwagen nach einem der vorstehenden Ansprüche, **dadurch gekennzeichnet, dass** er eine Lenkvorrichtung (54) umfasst, die einen Lenkaktuator (56) umfasst, der an der Hinterachse (38) befestigt ist und mit Hilfe eines Paars Lenkstangen (58) mit Lenkarmen (60) der jeweiligen Hinterräder (16) verbunden ist.

9. Hubwagen nach einem der vorstehenden Ansprüche, **dadurch gekennzeichnet, dass** er eine Hubvorrichtung (22) umfasst, die einen Teleskoparm (24) einschließt, der an einem hinteren Abschnitt (26) des Rahmens (12) um eine Querachse (B) angelenkt ist und sich nach vorne erstreckt.

10. Hubwagen nach einem der vorstehenden Ansprüche, **dadurch gekennzeichnet, dass** er eine Portalhubvorrichtung umfasst, die an dem vorderen Teil des Rahmens (12) montiert ist.

11. Hubwagen nach einem der vorstehenden Ansprüche, **dadurch gekennzeichnet, dass** er eine seitliche Fahrerkabine (18) und ein Batteriefach (32) umfasst, das einen Batteriepack (20) enthält, der seitlich aus der der Fahrerkabine (18) gegenüberliegenden Seite des Rahmens (12) herausgezogen werden kann.

## Revendications

1. Chariot élévateur électrique, comprenant un châssis (12) portant une paire de roues motrices avant (14) et un essieu arrière (38) portant une paire de roues motrices dirigées arrière (16) entraînées par un moteur électrique arrière (50), dans lequel le moteur électrique arrière (50) est fixé à l'essieu arrière (38), **caractérisé en ce que** le moteur électrique arrière (50) est agencé avec son propre axe de rotation (C) orienté verticalement.

2. Chariot élévateur selon la revendication 1, **caractérisé en ce que** l'axe de rotation (C) du moteur électrique arrière (50) est orthogonal à l'axe longitudinal (A) du chariot élévateur (10).

3. Chariot élévateur selon la revendication 1 ou la revendication 2, **caractérisé en ce que** le moteur électrique arrière (50) est fixé à l'essieu arrière (38) au moyen d'un support (52).

4. Chariot élévateur selon l'une quelconque des revendications précédentes, **caractérisé en ce que** le moteur électrique arrière (50) est relié à un engrenage différentiel (42) logé à l'intérieur de l'essieu arrière (38) et relié aux roues arrière (16) au moyen d'une paire d'arbres d'entraînement (44).

5. Chariot élévateur selon la revendication 4, **caractérisé en ce que** lesdits arbres d'entraînement (44) sont reliés aux roues arrière (16) respectives au moyen de joints homocinétiques (46) respectifs et à travers des réducteurs de vitesse (48) respectifs.

6. Chariot élévateur selon l'une quelconque des revendications précédentes, **caractérisé en ce que** les roues arrière (16) présentent le même diamètre que les roues avant (14).

7. Chariot élévateur selon l'une quelconque des revendications précédentes, **caractérisé en ce que** les roues arrière (16) présentent un diamètre égal ou supérieur à la moitié de la largeur du chariot élévateur (10).

8. Chariot élévateur selon l'une quelconque des revendications précédentes, **caractérisé en ce qu'**il comprend un dispositif de direction (54) comprenant un actionneur de direction (56) fixé à l'essieu arrière (38) et relié au moyen d'une paire de barres de direction (58) à des bras de direction (60) des roues arrière (16) respectives.

9. Chariot élévateur selon l'une quelconque des revendications précédentes, **caractérisé en ce qu'**il comprend un dispositif élévateur (22) incluant un bras télescopique (24) articulé sur une section arrière (26) du châssis (12) autour d'un axe transversal (B) et s'étendant vers l'avant.

10. Chariot élévateur selon l'une quelconque des revendications précédentes, **caractérisé en ce qu'**il comprend un dispositif élévateur à portique monté sur la partie avant du châssis (12).

11. Chariot élévateur selon l'une quelconque des revendications précédentes, **caractérisé en ce qu'**il comprend une cabine de conduite latérale (18) et un compartiment à batterie (32) contenant un bloc-batterie (20) qui peut être extrait latéralement du côté du châssis (12) opposé à ladite cabine de conduite (18).
